# EUROPEAN PATENT APPLICATION

(11) **EP 1 136 292 A2**
(43) Date of publication of application: **26.09.2001**
(21) Application number: 01106854.1
(22) Date of filing: 19.03.2001
(51) Int. Cl.: B60J 5/10

(54) **Rear and upper cross member frame and corresponding selfblocking coupling system for load openings of hooped vehicles**

(30) Priority: 20.03.2000 IT PD000019 U; 17.01.2001 IT PD010012
(71) Applicant: Aghito Sistemi S.r.l., 35027 Noventa Padovana (Padova) (IT)
(72) Inventor: Tognin, Sergio, Aghito Sistemi S.r.l., 35027 Noventa Padovana (Padova) (IT)
(74) Representative: Botti, Mario

(57) **Abstract**

This invention relates to an upper rear cross member (1) for the hatches of hooped vehicle having stanchions (6) arranged to support roofs at adjustable heights. This cross member comprises two or more telescopic elements (21,22) reciprocally sliding into each other, the lower element (22) coinciding with the upper ledge of the vehicle rear doors (P) and including means of attachment to the rear stanchions (6). Advantageously, the cross member can be tilted over the vehicle roof by virtue of it being hinge connected to a slide (11) running along roof beams/tracks (4) and displaceable angularly to allow the telescopic cross member (1) to be tilted and slid to clear the whole loading port of the rear gate and of the roof covered by the cross member.

## Description

### Field of the Invention

The present invention pertains to the field of industrial, freight and military transport means, such as motor trucks, trailers and semitrailers, and generic commercial haulers in general and more particularly to the structures of the loading bodies of such transport means, whether of the trailer, semitrailer, piggyback, cargo container, detachable bin, or another type.

Specifically, the invention relates to an upper rear cross member structure for the hatches of hooped vehicles that include supporting stanchions for variable height roofs.

### Prior Art

As is well known in this technical field, the loading platform of the above transport means are usually provided with a metal upperworks or frame, commonly referred to as a hooped assembly, over which a covering awning, a metal or plastics laminate or other material is laid. For this reason, reference will be made hereinafter to such vehicles and corresponding loading platforms as "hooped vehicles" and "hooped structures", respectively.

In other cases, fixed or removable sidewalls and a fixed or removable roof, electively of insulated construction, may be associated with the loading platform.

Such hooped structures are normally provided with an upper rear cross member. Not infrequently, this cross member interferes with the operations of getting the cargo conveniently stowed within the hooped structure, due to the difficult goods loading and positioning manoeuvres, especially where lift trucks or travelling cranes are used to deal with heavily loaded pallets.

With some ribbed structures, the upper hoops can be pushed aside and the upper rear cross member removed. For example, removable upper cross members are known that are connected to an upper ledge cross member of the vehicle rear gate by such pliant elements as covering sheets, bellows, etc. These pliant elements must be released and removed along with the ledge cross member, every time that the cross member is to be removed to gain unrestricted access to the loading port, i.e. the rear part of the vehicle, door included. For the purpose, an operator is obliged to climb up to roof level, or near it, to remove the pliant elements and the cross member and clear the rear door of the vehicle. Afterwards, all these parts must be replaced at the end of the loading operation.

For easier access to the loading compartment, the state of the art proposes mounting rigid upper rear cross members adapted to be hooked or fastened, with varying ease, to the stanchions, in order to close the loading compartment top in a single operation.

The arrangement for fastening the cross member to the stanchions usually comprises hinges, bolts, or latches, mounted on both lower edges of the cross member for engagement with complementary parts located on the mating edge of each stanchion.

These fasteners on the inward surface of the stanchions do interfere and substantially restrict the loading port and the access to the loading compartment with bulky cargo and any packages to be loaded at the last moment.

The underlying technical problem of this invention is to provide a novel type of upper rear cross member having appropriate structural and functional features to enable the hoop assembly to be shifted in the vertical direction and vary its clearance to suit a particular cargo and travelling route, without an operator having to remove the roof-cum-cross member as in prior designs. In particular, the new cross member allows the height of the hooped structure to be adjusted to fit within railroad clearance limits for piggyback conveyance.

Another object of the invention is to enable the loading compartment volumetric and hermetic adjustment to be performed from the loading platform or a nearby position; in this way, the need to have work performed high above the ground to plug the inter-space created by shifting the roof position is suppressed, and a tight fit to the rear door upper ledge can be achieved to stop water from leaking through these parts.

A further object of the invention is to provide for the upper rear cross member to be held linked to the roof and its shifting arrangement during the vehicle movements.

Still another object of the invention is to provide a novel type of self-locking attachment for fastening the stanchions of the hooped structure to any upper rear cross member adapted to be tilted and shifted.

### Summary of the Invention

The principle on which this invention stands is one of having the upper rear cross member constructed telescopically, i.e. with two or more elements arranged to slide inside one another. Such a cross member comprises, among its main parts, at least two parts: a sliding part and a cover part connecting door panels to the stanchions.

Based on this principle, the technical problem is solved by a cross member structure as previously indicated and as defined in the characterising part of Claim 1.

The invention also relates to an arrangement for attaching the cross member structure as previously described and as defined in Claim 7 and following.

The features and advantages of a cross member structure according to the present invention and of its attaching arrangement will be apparent from the following description of an embodiment thereof, given by way of non-limiting example with reference to the accompanying drawings.

In the drawings:

### Brief Description of the Drawings

Figure 1 is a schematic perspective view of a cross member according to this invention.
Figure 2 is a schematic side elevation view of the cross member shown in Figure 1.
Figures 3 and 4 are schematic side views of the cross member of Figure 1, shown in two different operating conditions.
Figure 5 is a schematic perspective view of a detail of the cross member shown in Figure 1.
Figure 6 is a schematic perspective view of the detail shown in Figure 5, viewed under a different angle.
Figure 7 is a further perspective view of a second embodiment of the cross member according to the invention.
Figures 8 and 9 are schematic side views of the cross member of Figure 7, shown in two different operating conditions.
Figure 10 is a perspective detail view of an attaching arrangement detail for the cross member of Figure 7.
Figures 11 and 12 are side sectional views, taken in a vertical and horizontal plane, respectively, of an attaching arrangement detail according to the invention.

### Detailed Description

Referring to the accompanying drawings, a structure of an upper rear cross member for hooped vehicles, according to this invention, is generally shown at 1 in schematic form.

Hooped vehicles mean here any freight, industrial, or military transport means equipped with a loading platform and a metal and/or composite upperworks or frame, commonly referred to as the hoop assembly, on which a covering awning, or a roof of metal or plastics laminate, etc. is fitted. The hooped structure includes stanchions or uprights 16 which are fixed to the loading platform standing upright, to which doors are hinged, and support the roof directly or indirectly.

Each stanchion 16 may be a one-piece element, with roof beams resting on its upper end, or a two-piece element, with a primary part 6 fixed and a secondary part 7 slidable relative to the former; in the latter case, the roof beams 4 can be adjusted in height and are attached to the top of the stanchion secondary part 7. Finally, the stanchions 16 could be formed of several bundled elements, with at least one element being mounted telescopically to raise the roof beams, always according to the above described systems.

Advantageously in this invention, the upper rear cross member 1 comprises two or more relatively movable elements arranged with the lower element, carrying ledge and fastening means for the door(s) on the vehicle rear end, held fixedly to the stanchions 16 and the upper' element free to follow the roof hoop assembly movements.

The cross member 1 mounts on either sides hooks or latches or another means of attachment, to be described in greater detail, which are aligned to the rear stanchions of the hooped structure, for attaching the cross member 1 to the stanchions and the sides of the upperworks.

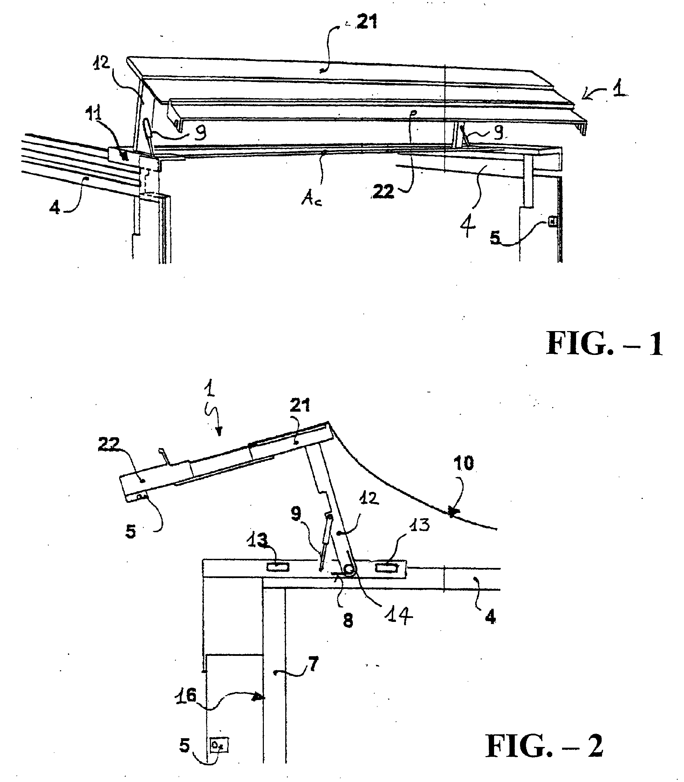

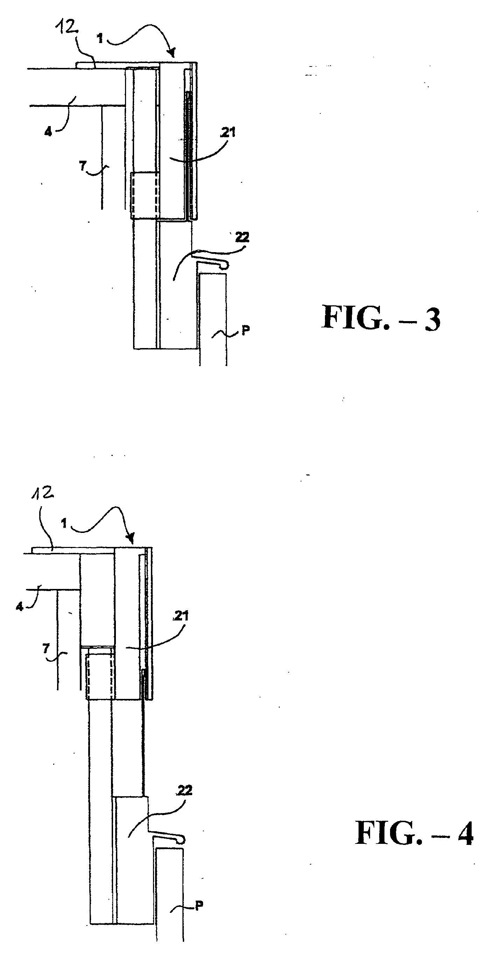

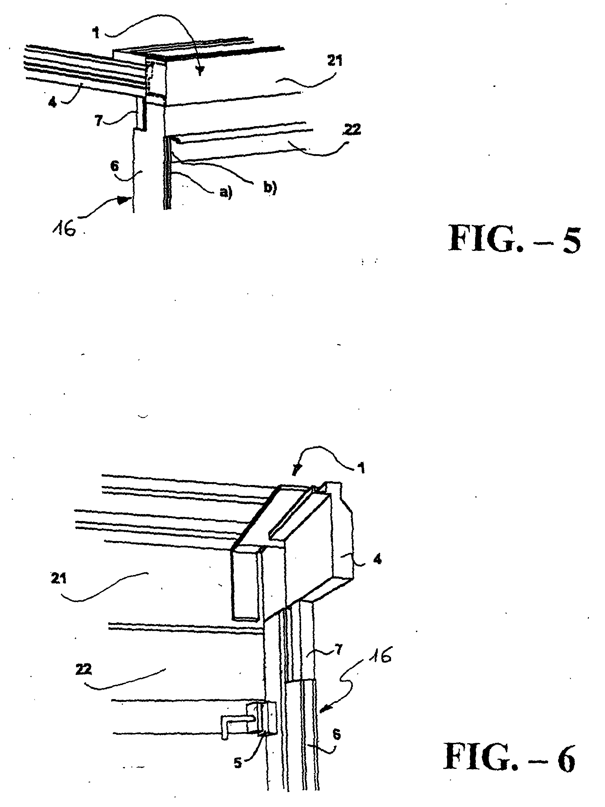

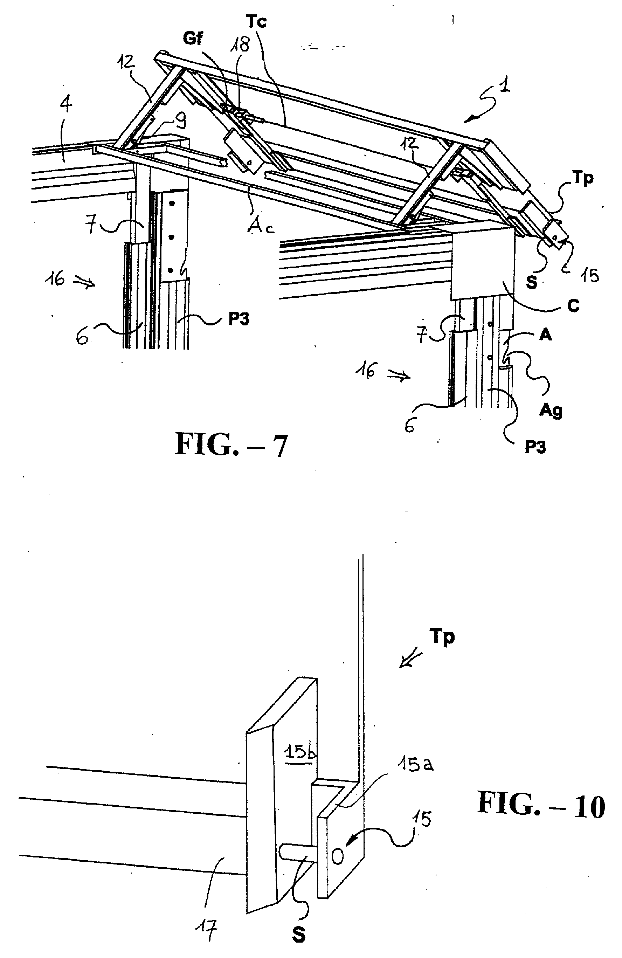

Figures 3 and 4 are side views of this cross member 1 at two different settings thereof, corresponding to the lowered and the raised position of the roof. The cross member 1 has two elements 21 and 22, reciprocally sliding into each other. One element, 22, will be referred to as the lower. element, and forms a ledge for the vehicle rear door(s), the latter being indicated in the drawings by their upper closure elements P. The other or upper element 21 of the cross member 1 is hinged to the last horizontal beams of the roof.

Advantageously, slides 11 are provided to connect horizontal beams/tracks 4 of the roof as shown in Figures 1 and 2. In particular, the upper element 21 of the cross member 1 is hinged to the hooped structure or the roof of the vehicle. For the purpose, arms 12 are provided on either sides, which have one end attached to the upper element 21 and the other end attached to a respective slide 11 through a hinge 14. The joint action of the arms 12, hinge-connected to the slide 11, allows the telescopic upper rear cross member 1 to be lifted and slid in a combined tilting and shifting movement. The slide 11 is arranged to run along the horizontal beams/rails 4 of the hooped structure roof and is wheel-mounted. Appropriate leaf and/or torsion springs 8 and gas springs 9 are associated respectively with the hinges 14 and the arms 12 to allow the cross member 1 to be moved smoothly into the open and the closed position. Also, the hinges 14 have aligned axes that are materialised by a rod Ac ensuring smoothness of angular movement.

In Figure 1, the cross member 1 is shown in the raised position with the slides 11, connected by two crosspieces 13, on their way to being shifted to clear the rear hatch.

Also shown in Figure 1 are linkages of the slides 11 effective, in combination with the leaf and/or torsion 8 and gas 9 springs, to produce smooth opening and closing movements of the telescopic cross member. Figure 2 is a side view of the cross member 1, being hinged to the slide 11 through a linkage 12 that includes gas springs 9 and leaf and/or torsion springs 8. It can be seen that the lower 22 and upper 21 portions of the cross member 1 are in the open condition, and that the covering awning 10 is attached to the upper portion of the cross member.

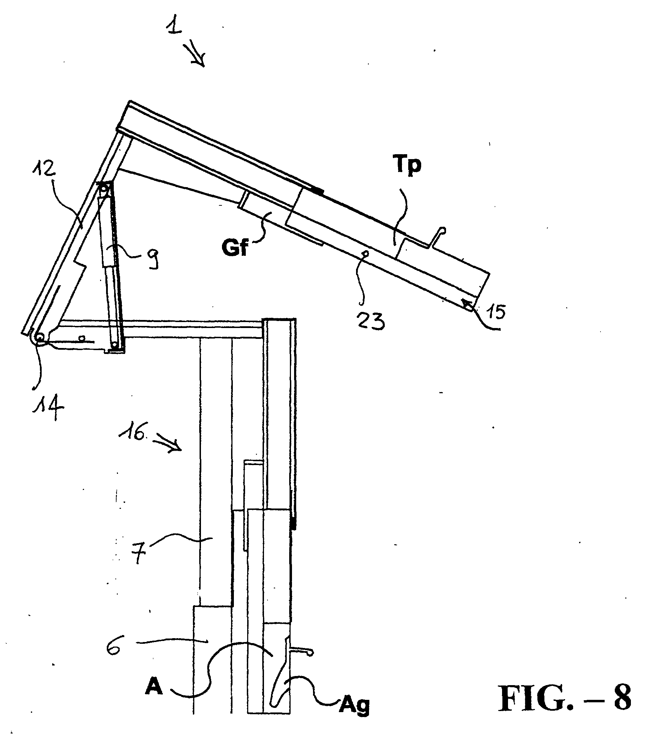

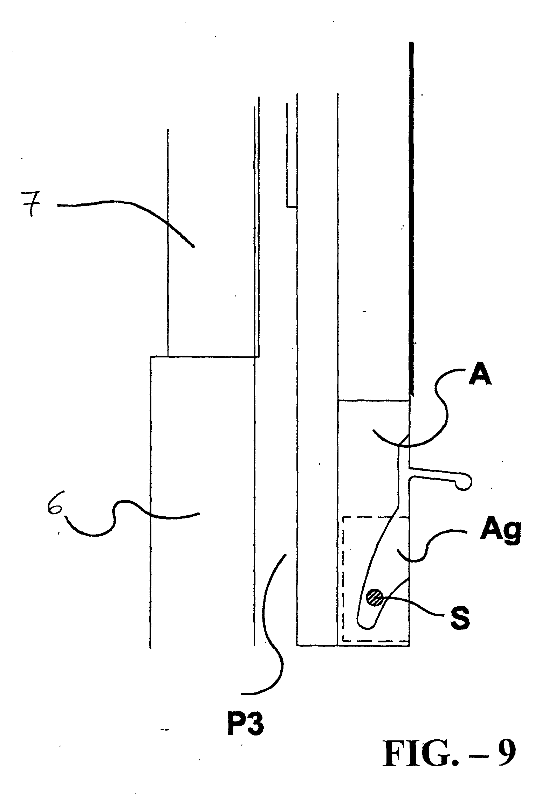

Figures 5 and 6 are exterior and interior views, respectively, of the upper rear corner and edge of the vehicle hooped structure, where the cross member 1 is shown to comprise the lower element 22 and upper element 21.

As said before, the cross member 1 comprises two elements 21 and 22, reciprocally sliding into each other. In particular, the lower element 22 has a portion (a) inwards of the stanchions 16, and a portion (b) abutting the outward sides of the stanchions 16 and sliding inside the upper element 21 or further in. In this way, a watertight fit is provided for the upper portion of the rear wall, and a proper fit of the rear doors of the loading body that abut the outward portion (b), together with their closure means, is ensured.

Also shown in Figures 5 and 6 are the telescopic stanchions 16, which support and adjust in height with their moving parts 7 the horizontal beams/tracks 4 of the roof. Ledge and securing elements 5 of the telescopic cross member 1 hold the lower closure/connection element 22 firmly linked to the vertical telescopic stanchions 16 of the upperworks of the loading body when the cross member 1 is in the closed position.

The above description outlines the invention sufficiently for a skilled person to carry it into effect. Of course, modifications may be made in practising the invention without departing from its gist.

In particular, each lower element 22 of the cross member 1 is arranged, in the invention, to slide inside the upper element 21. Thus, if the upperworks of the loading body is moved up/down to accommodate the cargo or conform to road traffic regulations, a perfect fit of the upper portion between doors P, rear stanchions 16, and the roof, and a close fit of the rear doors are ensured.

When the vehicle is not expected to load or unload cargo, the cross member 1 would locate between the doors and the rear upper edge of the upperworks.

When the vehicle is to load or unload cargo, or whenever the upper rear edge of the loading body is to be cleared, the cross member 1 is tilted and raised by means of the arms 12 hinged to the slides 11, and from this setting, it can be moved toward the vehicle front on the slide 11 along the horizontal beams/tracks 4 of the hooped structure roof.

Thus, the whole "gape" of the rear end and/or the whole roof can be cleared for loading a maximum of cargo conveniently and quickly.

It should be noted that the upper horizontal beams/tracks 4 of the roof, extending at the sides of the hooped structure and bearing the slides 11 of the beam, are attached to the telescopic stanchions 6, 7. This feature has a major advantage in that the height of the roof, that is the loading port, can be changed to suit the type of cargo and journey. It is known, in fact, that the height allowance for automotive vehicles changes between nations, and may sustain further restrictions for piggyback conveyance.

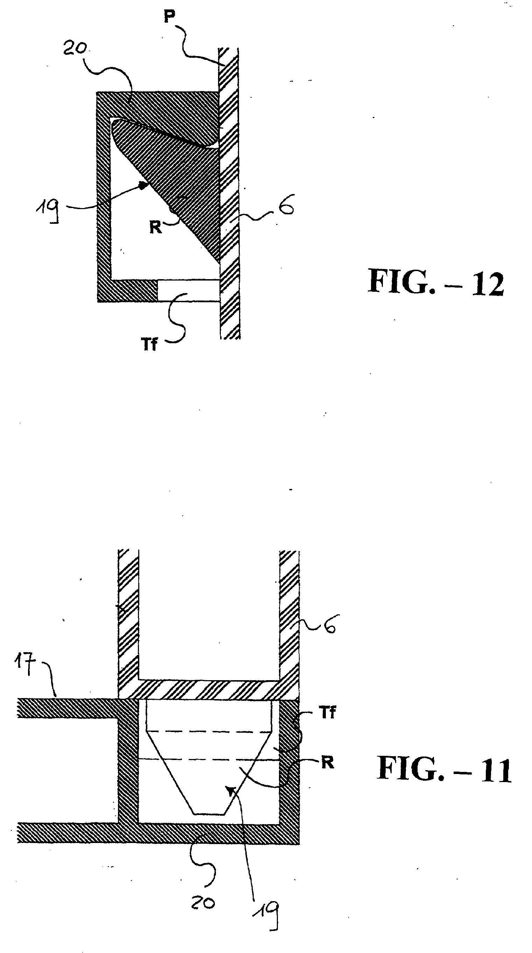

A particular type of attachment of the cross member 1 to the stanchions 16, effective to hold them firmly together despite the jolts and bumps of road travelling, will now be described, with reference to the examples of figures 7 to 12.

The attachment of this invention is formed flush with the stanchion 16, i.e. does not protrude into the gate opening, and can be fixed also to stanchions of already existing vehicles.

As previously described, the stanchion 16 comprises a fixed part, a telescopic part 7 and a connecting wall.

The fixed 6 and telescopic 7 parts of the stanchion slide inside each other to accommodate the varying height of the loading compartment roof.

An anchor plate A joining the stanchion to the cross member 1 is provided on the stanchion fixed part 6 at the locations of the closing door upper edge and the inward lower edge of the upper cross member 1 in the closed position.

The anchor or joining plate A is flush with the fixed part 6 of the stanchion 16, and is formed with a groove or slot Ag sloping outward from the vertical and having an opening in its upper portion.

Advantageously, the cross member 1 carries, at a fixed or variable height, a U-shaped attachment 15, which is connected to either lower edges 17 of the inward surface of its rear wall Tp, specifically in the lower section of abutment of the loading compartment doors.

This U-shaped attachment 15 comprises two parallel upright walls or supports 15a, 15b having a horizontal pin S mounted therebetween.

The location of said U-shaped attachment 15 on the rear wall Tp of a composite or fixed-height type of tilting cross member and its dimensions are such that, with the cross member in the closed position, the U-shaped attachment 15 engages with the anchor plate A of the stanchion, and the horizontal pin S fits exactly in the groove or slot AG of the anchor or joining plate A provided in the fixed part of the stanchion.

Advantageously, the wall 15b of the attachment 15 has a bevelled edge acting as a lead-in to position the cross member 1 between the fixed parts 6 of the stanchions 16. Also, the walls 15b of opposite attachments 15 abut against the stanchions 16 with the cross member in the closed position, and establish a rigid connection of predetermined stability between the cross member 1 and the stanchions 16, a specially valuable feature with the vehicle in motion.

A connection wall or casing C is mounted on the upper end of the telescopic part 7 of the stanchion, specifically on the side surface corresponding to the wall, which casing can slide along the stanchion fixed part 6 to close the gap created by the difference in height of the fixed part 6 and the raised telescopic part 7, and to prevent dirt, water, dust, or else, from entering the hooped structure through the gap that may be left above and laterally of the fixed 6 and telescopic 7 parts, respectively, of the stanchion 16.

Alternatively, a lug or jut 19 facing up and to the rear of the loading compartment could be provided on the stanchion, on the door ledge surface, in place of the anchor or joining plate A with a groove or slot Ag. In essence, the coupling arrangement, previously described in relation to the plate A formed with the groove Ag for receiving the pin S, can be embodied in a dual form by having a lug 19 project from the stanchion and a mating socket 20 formed in the outer wall, on the lower edges 17 of the cross member 1. Accordingly, the lower edge of the cross member 1 may also be formed with a coupling socket 20 aligned to said jut 19 on the stanchion. The jut 19 is received in the socket 20 for firm connection.

To prevent the composite cross member from shifting, that is to lock its telescopic parts 21 and 22, the female telescopic guides Gf may both be provided with return spring latches 18 fitting in corresponding holes 23 formed in the stems of the telescopic guides Gf. For simultaneous operation, the latches 18 may be interlinked by a rope Tc or else.

To ensure that the composite cross member telescopically extending rotation is linear, the female telescopic guides Gf are provided with a side extension bearing a complementary guide rod, as shown in Figures 7 and 8. This bearing side extension is provided on the inner side of the cross member facing the vehicle front, and oriented toward the cross member part where the telescopic guide stems are secured.

The above component parts are shown in Figures 7 to 12 as follows.

Figure 8 is a vertical section of the upper rear portion of a loading compartment having a raising roof 1 and a composite cross member 1. Shown are the anchor plate A with a groove or slot Ag, set flush with the fixed part 6 of the stanchion, and the U-shaped attachment 15 mounted on the lower inner edge 17 of the rear wall Tp of the composite cross member 1, and a female telescopic guide thereof with a bearing extension Gf.

Figure 9 is a view of a detail of the groove Ag with a pin S inserted therein and in the locked position.

Figure 7 is a perspective view of the rear portion of the hooped structure of the vehicle loading compartment.

Shown are the fixed 6 and telescopic 7 parts of the stanchions 16, the U-shaped attachment 15 of the rear wall Tp of the composite cross member 1, the latches 18 with the corresponding rope Tc of the female telescopic guides Gf for preventing the cross member from shifting between the telescopic part 21, 22, the anchor plate A with the groove or slot Ag flush with the stanchion fixed part 6, the horizontal pin S, and the casing C.

Figure 10 shows the inner left lower corner of the composite cross member, with the U-shaped attachment 15 of the rear wall Tp, where the horizontal attachment pin S and the stabilising wall 15b are clearly visible.

Figures 11 and 12 are schematic views of an embodiment where polygonal juts 19, which carry also the reference R, are provided on the stanchions 16, and the lower edge 17 of the composite and/or fixed-height tilting cross member is formed with a socket 20 with holes Tf for engagement with said juts R.

The above schematic description should be adequate to enable the skilled person in the art to practice the invention, and modifications may be made without departing from the scope of the inventive concept.

## Claims

1. An upper rear cross member (1) for hooped vehicle hatches having stanchions (6) arranged to support a roof at adjustable heights, **characterised in that** it comprises two or more telescopic elements (21,22) reciprocally sliding into each other, the lower element (22) coinciding with the upper ledge of the vehicle rear doors (P) and including means of attachment to the rear stanchions (6), and the upper element (21) being hinge-connected to the upper hoop assembly or to the roof of the vehicle.

2. A cross member according to Claim 1, **characterised in that** said lower element (22) includes both the rear door ledge and said means of attachment.

3. A cross member according to Claim 1, **characterised in that** the stanchions (6) are telescopic stanchions arranged to support horizontally-laid roof beams/tracks (4).

4. A cross member according to Claim 1, **characterised in that** the telescopic cross member (1) is hinged to a slide (11) adapted to run along roof beams/tracks (4), and displaceable angularly to allow the telescopic cross member (1) to be tilted and slid to clear the whole loading port of the rear gate and of the roof covered by the cross member.

5. A cross member according to Claim 4, **characterised in that** a combination of gas springs (9) and leaf and/or torsion springs (8) is associated with said slide (11) to smooth the opening and closing movements of the upper rear cross member (1).

6. A cross member according to Claim 1, **characterised in that** a covering awning (10) of the roof is attached to the side edges of said upper element (21).

7. A self-locking attachment for the hatches of hooped vehicles having an upper rear cross member (1) as claimed in Claim 1,
**characterised in that** said means of attachment comprise an anchor or joining plate (A) being mounted on a fixed part (6) of the stanchion and aligned to the upper edge of a rear closing door and to the lower edge of the upper cross member in the closed position, said anchor of joining plate (A) being set flush with the fixed part (6) of the stanchion and formed with a groove or slot (Ag) sloping from the vertical and having the opening in its upper portion.

8. A self-locking attachment according to Claim 7, **characterised in that** the covering upper rear cross member has, on each vertical side thereof, a U-shaped attachment (15) formed of two parallel upright parts or supports (15a, 15b) with a horizontal pin (S) affixed therebetween, said U-shaped attachment (15) being mounted on the inward surface of the rear wall (Tp) in the lower section of the cross member to engage in the groove (Ag) of said anchor plate (A), thereby holding said cross member firmly when the vehicle doors are in their shut ledge.

9. A self-locking attachment according to Claim 7, **characterised in that** it has a polygonal jut (19) facing upwards and to the rear of the loading compartment, and that the lower edge (17) of the upper rear covering cross member (1) has a socket (20) arranged to receive said jut on the stanchion to hold the cross member firmly when the vehicle doors are in their shut ledge position.

10. A self-locking attachment according to Claim 7, **characterised in that**, provided on the side surface corresponding to the wall of the upper portion of the stanchion telescopic part is a connecting wall (C) arranged to slide along the stanchion fixed part (6), cover the gap created by the difference in height between the stanchion fixed part (6) and telescopic part (7), and prevent dirt, water, dust or else from entering the cargo compartment through the gap that may be left above the fixed part (6) of the stanchion.

11. A self-locking attachment according to Claim 7, **characterised in that** the composite cross member (1) is provided, on each telescopic female guides thereof, with return spring latches (18) on the inward side of the rear wall (Tp), said latches engaging in holes purposely provided in the telescopic guide stems (Gf), and being interlinked by a rope (Tc) or else.

12. A self-locking attachment according to Claim 7, **characterised in that** the composite cross member is provided, on each telescopic female guides and facing the interior of the loading compartment, with a side extension bearing a complementary guide stem and being oriented toward the portion of the cross member where the telescopic guide stems are secured.

13. A self-locking attachment according to Claim 8, **characterised in that** one (15b) of said two walls of the U-shaped attachment (15) abuts against the stanchions (16) with the cross member in the closed position, thereby maintaining a stable rigid connection of the cross member (1) to the stanchions (16) with the vehicle in motion.

14. A self-locking attachment according to Claim 8, **characterized in that** one (15b) of said two walls of the U-shaped attachment (15) has a bevelled edge.
